# EUROPEAN PATENT APPLICATION

(11) **EP 4 818 233 A1**
(43) Date of publication of application: **07.10.2026**
(21) Application number: 26168421.1
(22) Date of filing: 27.03.2026
(51) Int. Cl.: C08J 3/03, B65D 65/46, C08J 3/205, C08J 5/18, C08L 5/06, C11D 1/00, C11D 17/04, C08L 89/00, C11D 3/37

(54) **WATER-SOLUBLE UNIT DOSE ARTICLE**

(30) Priority: 01.04.2025 EP 25167642
(71) Applicant: The Procter & Gamble Company, Cincinnati, OH 45202 (US)
(72) Inventor: COURCHAY, Florence Catherine, 1853 Strombeek-Bever (BE); KEULEERS, Robby Renilde François, 1853 Strombeek-Bever (BE); LOCKE, Erica Lynne, Cincinnati, 45202 (US); SOARES, Mario Nogueira, 1853 Strombeek-Bever (BE)
(74) Representative: P&G Patent Belgium UK

(57) **Abstract**

A unit dose article comprising a water-soluble water-soluble film, wherein the water-soluble film comprises a water-soluble polymer, wherein the water-soluble polymer comprises a blend of:
i) pectin; and
ii) a caseinate polymer.

## Description

### FIELD OF THE INVENTION

Water-soluble unit-dose article made from a water-soluble film comprising a water-soluble polymer, the water-soluble polymer comprises a blend of:
i) pectin; and
ii) a caseinate polymer.

### BACKGROUND OF THE INVENTION

The demand for innovative packaging solutions has led to significant interest in the development of water-soluble films, particularly for applications in laundry and automatic dishwashing. These films serve as a convenient means to encapsulate detergents, fabric softeners, and other cleaning agents, allowing consumers to use these products in a pre-measured, easy-to-use format. The primary requirement for these films is their ability to dissolve effectively in water, facilitating the rapid release of the encapsulated substances during the washing process.

In the realm of water-soluble films, polyvinyl alcohol (PVA) has been widely utilized due to its favourable properties, including good film-forming capabilities, water solubility, and mechanical strength. However, while PVA-based films have been successful in various applications, there is a desire to find alternative films made of natural materials that present a good solubility profile, especially in cold and quick and low water wash conditions.

### SUMMARY OF THE INVENTION

The present invention relates to a water-soluble unit dose article comprising a water-soluble film. The water-soluble film comprises a water-soluble polymer, wherein the water-soluble polymer comprises a blend of pectin and a caseinate polymer. It was surprisingly found that the film of the water-soluble unit dose article according to the present invention presents a good solubility profile, better than a pectin film or a caseinate polymer film. The water-soluble unit dose article according to the present invention, comprises a treatment composition and at least one internal compartment, wherein the treatment composition is contained within the at least one compartment. The treatment composition is selected from laundry detergent composition, laundry softening composition, automatic dishwashing composition, hard surface cleaning composition or a mixture thereof.

### DETAILED DESCRIPTION OF THE INVENTION

### Water-soluble film

The water-soluble film comprises a water-soluble polymer, wherein the water-soluble polymer comprises a blend of pectin and a caseinate polymer. The pectin and caseinate polymer are described in more detail below.

The water-soluble film of the present invention is soluble in water. The water-soluble film preferably has a thickness of between 30µm and 150µm, preferably between 50µm and 100µm, most preferably between 60µm and 85µm.

### The water-soluble film properties:

The water-soluble film preferably has a dissolution time at a thickness of about 76 micron of less than 90 seconds, preferably less than 60 seconds, more preferably less than 30 seconds at 10°C, measured according to the MonoSol Test Method 205 (MSTM 205), as described in U.S. Patent No. 7,022,656, column 8, lines 10 to 57. Preferably the water-soluble film has a dissolution time at a thickness of about 76 micron of less than 120 seconds, preferably less than 90 seconds, more preferably less than 60 seconds, even more preferably less than 30 seconds at 5°C, measured according to the MonoSol Test Method 205 (MSTM 205). Preferably, the disintegration time of the film at a thickness of about 76 micron is about 40 seconds or less, or about 30 seconds or less at a temperature of 10°C, measured according to the MonoSol Test Method 205 (MSTM 205). Even more preferably, the disintegration time of the film at a thickness of about 76 micron is about 40 seconds or less, or about 33 seconds or less at a temperature of 5°C, measured according to the MonoSol Test Method 205 (MSTM 205).

Film disintegration times (I) and film dissolution times (S) can be corrected to a standard or reference film thickness (76 microns) using the exponential algorithms shown below in Equation 1 and Equation 2, respectively. $Icorrected = Imeasured \times \left(reference {thickness}^{2}/measured {thickness}^{2}\right)$ $Scorrected = Smeasured \times \left(reference {thickness}^{2}/measured {thickness}^{2}\right)$

The water-soluble film preferably has % of dissolution of 25% or more, preferably 35 % or more as measured by the % dissolution test method described herein after. Generally, higher % of dissolution is desirable to reduce the likelihood of residual film remaining on a washed article subjected to stressed washing conditions (e.g., in low water conditions (such as in overloading of the washing machine) and in cold wash water conditions). Such residues can be dissolved upon an additional exposure to water but they could require additional effort from the user and as such are not desirable.

In general, higher tensile strength values are desirable because they would give rise to stronger water-soluble unit dose articles. Higher values of e-Modulus are desirable from the perspective of providing water-soluble unit dose articles having a greater stiffness and a lower likelihood of deforming and sticking to each other when loaded on top of each other during production. Preferably, when measured at 23°C and 40%RH, the water-soluble film has a tensile strength or stress at break of at least 20 N/mm2, preferably between 20 N/mm2 and 60 N/mm2, more preferably between 25 N/mm2 and 60 N/mm2, a modulus at 10% elongation of at least about 20 N/mm2, and stress at 100% elongation of at least 12 N/mm2. Further, the water-soluble film has a tensile strain at break, as measured following the same method, of at least 50%, preferably from about 50% to about 1600% or from about 60% to about 800%, preferably from 300% to 1200%, more preferably from about 400% to about 800%. When measured at 100°C and 40%RH, the water-soluble film has a tensile strain at break, as measured following the same method, of at least from about 50%.

Preferably, the water-soluble film and/or the water-soluble polymeric resin and/or the individual water-soluble polymers have a biodegradation rate of at least 60%, preferably at least 65%, more preferably at least 70%, after 60 days, or at least 60%, preferably at least 65%, more preferably at least 70%, after 28 days according to OECD 301B testing.

Preferably, the water-soluble film has a glass transition temperature of less than -5°C and a melting transition of more than 80°C as measured by DSC standard procedure.

A water-soluble film may be further plasticized upon contact with a liquid detergent composition, resulting in swelling of the water-soluble film (positive film swelling value). Alternatively, a water-soluble film may be de-plasticized upon contact with a liquid detergent composition, resulting in a de-swelling of the water-soluble film (negative film swelling value). A negative film swelling value may result in a brittle film upon product ageing, while a film swelling value of more than 15% may render the overall unit dose article become floppy upon ageing and as such aesthetically unappealing. Preferably the film swelling value is between 0% and 15%, more preferably between 5% and 15%.

Preferably, the pectin and the caseinate polymer are in a weight ratio of from 90:10 to 10:90, preferably 75:25 to 25:75.

The water-soluble polymer may be present between 50% and 95%, preferably between 55% and 90%, more preferably between 60% and 80% by weight of the film.

Preferably, the water-soluble film comprises a non-aqueous plasticizer. Preferably, the non-aqueous plasticizer is selected from polyols, sugar alcohols, and mixtures thereof. Suitable polyols include polyols selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof. Suitable sugar alcohols include sugar alcohols selected from the group consisting of isomalt, maltitol, sorbitol, xylitol, erythritol, adonitol, dulcitol, pentaerythritol and mannitol, or a mixture thereof. More preferably the non-aqueous plasticizer is selected from glycerol, 1,2-propanediol, dipropylene glycol, 2-methyl-1,3-propanediol, trimethylolpropane, triethyleneglycol, polyethyleneglycol, sorbitol, or a mixture thereof, most preferably selected from glycerol, sorbitol, trimethylolpropane, dipropylene glycol, and mixtures thereof. One particularly suitable plasticizer system includes a blend of glycerol, sorbitol and 2-ethyl-2-hydroxymethyl-1,3-propanediol. Another particularly suitable plasticizer system includes a blend of glycerin, dipropylene glycol, and sorbitol. Preferably, the film comprises between 5% and 50%, preferably between 10% and 40%, more preferably between 20% and 30% by weight of the film of the non-aqueous plasticizer.

Preferably, the water-soluble film according to the invention comprises a surfactant. Preferably, the water-soluble film comprises a surfactant in an amount between 0.1% and 5%, preferably between 1% and 3% by weight of the water-soluble film. Suitable surfactants can include the nonionic, cationic, anionic, amphoteric and zwitterionic classes. Suitable surfactants include, but are not limited to, polyoxyethylenated polyoxypropylene glycols, alcohol ethoxylates, alkylphenol ethoxylates, tertiary acetylenic glycols and alkanolamides (nonionics), polyoxyethylenated amines, quaternary ammonium salts and quaternized polyoxyethylenated amines (cationics), and amine oxides, N-alkylbetaines and sulfobetaines (zwitterionics). Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

Preferably the water-soluble film according to the invention comprises lubricants / release agents. Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. The amount of lubricant/release agent in the water-soluble film is in a range of from 0.02% to 1.5%, preferably from 0.1% to 1% by weight of the water-soluble film.

Preferably, the water-soluble film comprises fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. Preferably, the amount of filler, extender, antiblocking agent, detackifying agent or mixture thereof in the water-soluble film is in a range of from 0.1% to 25%, preferably from 1% to 10%, more preferably from 2% to 8%, most preferably from 3% to 5% by weight of the water-soluble film. In the absence of starch, one preferred range for a suitable filler, extender, antiblocking agent, detackifying agent or mixture thereof is from 0.1% to 1%, preferably 4%, more preferably 6%, even more preferably from 1% to 4%, most preferably from 1% to 2.5%, by weight of the water-soluble film.

Preferably the water-soluble film according to the invention has a residual moisture content of at least 4%, more preferably in a range of from 4% to 15%, even more preferably of from 5% to 10% by weight of the water-soluble film as measured by Karl Fischer titration. The film has been pre-conditioned at a temperature of 20°C and a relative humidity of 60% for 24 hours prior to determining the residual moisture content.

Preferably the water-soluble film according to the invention comprises an aversive agent, preferably a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1ppm to 5000ppm, or even 100ppm to 2500ppm, or even 250ppm to 2000rpm in reference to the water-soluble film.

The water-soluble film according to the invention may be opaque, transparent or translucent. The water-soluble film according to the invention may comprise a printed area. The area of print may be achieved using standard techniques, such as flexographic printing or inkjet printing.

The water-soluble film or water-soluble unit dose article according to the invention or both may be coated with a lubricating agent. Preferably, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

### Pectin

Pectin is a complex polysaccharide found in the cell walls of various fruits and vegetables. It is a natural substance that acts as a structural component, providing strength and rigidity to plant tissues. Pectin is primarily extracted from citrus fruits, apples, and other sources rich in this polysaccharide.

Chemically, pectin is composed of a chain of sugar molecules, including galacturonic acid, which is the main building block. The structure of pectin can vary depending on factors such as the source and extraction method. Pectin molecules may contain side chains of various sugars, such as arabinose, galactose, and rhamnose, which contribute to its functional properties. It can also have methyl esters of galacturonic acid that are native to the material.

The pectin may be unmodified or modified and such modification includes substitution (alkylation, amidation, quaternization, thiolation, sulfation, oxidation, etc.), chain elongation (cross-linking and grafting) and depolymerization (chemical, physical, and enzymatic degradation).

Pectins comprise helical chains of galacturonic acid (GalA) residues linked by alfa-1,4 glycosidic linkages, wherein the carboxyl groups may be esterified to any degree with methyl groups or may be partially or completely converted into salts. The pectin may comprise any type of galacturonan including heterogalacturonans (HG), substituted galacturonans, rhamnogalacturonan I pectins (RG-I), rhamnogalacturonan II (RG-II), xylogalacturonan (XGA) or any mixture thereof.

### Esterification

The esterification level or degree of esterification (DE) is the ratio of esterified galacturonic acid groups to total galacturonic acid groups (and thus having a value between 0% and 100%). Preferably the degree of esterification is from 1% to 49%, more preferably from 25% to 48%, most preferably from 24 to 35%.

The level of esterification by methyl groups may be such that the pectin is a high methoxy pectin (HM pectin) - with more than half of all the galacturonic acid esterified; or a low methoxy pectin (LM pectin) with less than half of all the galacturonic acid esterified. In the case of LM pectin the degree of methoxylation is preferably from 1% to 49%, more preferably from 25% to 48%, most preferably from 24 to 35%. Preferably the pectin is a high methoxy pectin.

### Amidated Pectin

The pectin can be amidated. Alternatively, the pectin may be free of amidation. A representative segment of a nonacetylated, non-amidated pectin molecule

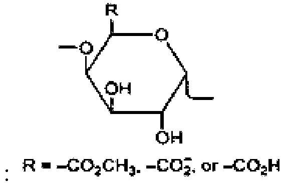

By "amidated pectin" it is intended to mean that the pectin is modified by conversion of a portion of the carboxylic groups to carboxylic acid amide, e.g. as with the amidated unit shown below:

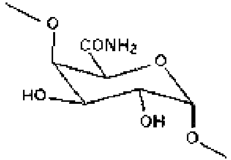

Preferably the degree of amidation is from 1% to 90%, more preferably from 10 to 50% even more preferably from 20% to 40% most preferably from 20 to 30%. Degree of amidation (DA) can be measure by various known methods for example near infrared spectroscopy, based on the total number of galacturonic acid units in the molecule.

Pectins may be amidated by any suitable method e.g.by ammonia which may be dissolved in methanol or in aqueous form. This converts the methyl ester groups into carboxamide [-CONH2] groups. Because in the process, methyl ester groups are lost as they are converted into carboxamide groups a low methoxy (LM) pectin (by definition) is formed. Amdiated (LM) pections may have 15 - 25% of the carboxyl groups converted into carboxamide groups.

### Low Methoxy Amidated Pectin

Amidation may achieve reduced methyl levels and so providing a low methoxy, amidated pectin.

### Source

The pectin is preferably plant derived and may be sourced from any suitable source such as citrus peel or pomace from e.g., both by-products of fruit production. Pomace may also be obtained from sugar beet.

### Pectin MW

The pectin has a weight average molecular weight of not less than 200,000 g/mol, preferably not less than 250,000 g/mol, more preferably not less than 300,000 g/mol.

### Caseinate polymer

Casein is a protein derived from milk which is relatively insoluble in water. It is often obtained by precipitation following addition of an acid to milk (casein acid) or rennet (rennet casein). Caseinate is defined as a salt of casein; its counterion typically selected from the group consisting of calcium, potassium, ammonium, magnesium and sodium, or mixtures thereof, most preferably sodium.

The water-soluble film according to the present invention comprises a water-soluble polymer comprising a blend of caseinate polymer and pectin wherein the caseinate polymer is preferably selected from alkaline metal salts of caseinate, more preferably sodium caseinate.

While it is stated the polymer according to the present invention comprises caseinate, in practice this caseinate will be a mixture of caseinate and casein impurity. The relative weight ratio of the casein impurity to caseinate being a function of the pH of the water-soluble film. Therefore, when caseinate is stated herein, this encompasses pure sodium caseinate as well as levels of casein impurity.

Without wishing to be bound by theory, casein consists of a(s1)-, a(s2)-, β- and κ- casein. Like any protein, casein is made up of hundreds of individual amino acids, each of which may have a positive or a negative charge, depending on the pH of the surrounding system. At some pH value, all the positive charges and all the negative charges on the casein remain in balance (i.e., the net charge on the protein is zero); this pH value is known as the isoelectric point (IEP), which is 4.6 for casein. The IEP is the pH at which the protein is least soluble. Therefore, to make the casein soluble it is used in the caseinate form, as the alkali conditions make the casein soluble.

Preferably, the water-soluble polymer is present at 60% to 80% by weight of the water-soluble film according to the invention and consists of a mixture of pectin and caseinate polymer.

### Method of Making Film

The water-soluble film according to the invention may be formed by admixing and co-casting pectin and caseinate polymer according to the types and amounts described herein, together with the preferred and optional secondary additives described herein within a casting solution. If the polymers are first admixed then the water-soluble film is preferably formed by casting the resulting admixture (e.g., along with other plasticizers and other additives) to form a film. Another aspect is characterized by the water-soluble film being formed by extrusion, for example, blown extrusion. Most preferably the water-soluble films according to the invention are prepared by solvent casting.

### Water-soluble unit dose article

The present invention relates to a water-soluble unit dose article comprising the water-soluble film described herein before., a treatment composition and at least one internal compartment, wherein the treatment composition is contained within the at least one compartment. The treatment composition is described in more detail below.

The water-soluble unit dose article comprises the water-soluble film shaped such that the unit-dose article comprises at least one internal compartment surrounded by the water-soluble film. The unit dose article may comprise a first water-soluble film and a second water-soluble film sealed to one another such to define the internal compartment. The water-soluble unit dose article is constructed such that the treatment composition does not leak out of the compartment during storage. However, upon addition of the water-soluble unit dose article to water, the water-soluble film dissolves and releases the contents of the internal compartment into the wash liquor.

The compartment should be understood as meaning a closed internal space within the unit dose article, which holds the detergent composition. During manufacture, a first water-soluble film may be shaped to comprise an open compartment into which the treatment composition is added. A second water-soluble film is then laid over the first film in such an orientation as to close the opening of the compartment. The first and second films are then sealed together along a seal region. Sealing could be done following solvent sealing, heat sealing, or a combination thereof. A preferred sealing solvent is water.

The unit dose article may comprise more than one compartment, even at least two compartments, or even at least three compartments. The compartments may be arranged in superposed orientation, i.e. one positioned on top of the other. In such an orientation the unit dose article will comprise three films: top, middle and bottom. Alternatively, the compartments may be positioned in a side-by-side orientation, i.e. one orientated next to the other. The compartments may even be orientated in a 'tyre and rim' arrangement, i.e. a first compartment is positioned next to a second compartment, but the first compartment at least partially surrounds the second compartment but does not completely enclose the second compartment. Alternatively, one compartment may be completely enclosed within another compartment.

Wherein the unit dose article comprises at least two compartments, one of the compartments may be smaller than the other compartment. Wherein the unit dose article comprises at least three compartments, two of the compartments may be smaller than the third compartment. Wherein the unit dose article comprises at least four compartments, at least three of the compartments may be smaller than a fourth compartment, and preferably the smaller compartments are superposed on the larger compartment. The superposed compartments preferably are orientated side-by-side.

Preferably, the water-soluble unit dose article comprises at least two compartments, preferably at least three compartments, even more preferably at least four compartments, most preferably wherein the water-soluble unit dose article comprises a first compartment and at least a second compartment superposed onto the first compartment, more preferably at least a third compartment orientated side-by-side with respect to the second compartment and the second compartment and the third compartments are superposed onto the first compartment, even more preferably at least a fourth compartment orientated side-by-side with respect to the second compartment and third compartment and the second compartment, the third compartment and the fourth compartments are superposed onto the first compartment.

In a multi-compartment orientation, the detergent composition may be comprised in at least one of the compartments. It may for example be comprised in just one compartment, or may be comprised in two compartments, or even in three compartments, or even in all available compartments.

Each compartment may comprise the same or different compositions. The different compositions could all be in the same form, or they may be in different forms.
The water-soluble unit dose article may comprise at least two internal compartments, wherein the detergent composition is comprised in at least one of the compartments, preferably wherein the unit dose article comprises at least three compartments, wherein the detergent composition is comprised in at least one of the compartments.

The water-soluble unit dose article according to the invention may comprise at least one water-soluble film according to the invention. Alternatively, the water-soluble unit dose article according to the invention may comprise at least two or even at least three water-soluble films according to the invention. Alternatively, the water-soluble unit dose article according to the invention solely comprises water-soluble films which are according to the invention, i.e. not comprising any water-soluble films outside the scope of the invention. Preferably, water-soluble mono-compartment unit dose articles or water-soluble multi-compartment unit dose articles in which the multiple compartments are in a side by side configuration are created in which both the bottom and top water-soluble films enclosing the individual compartment(s) are water-soluble films according to the invention. Alternatively, either the top or the bottom water-soluble film is according to the invention. Water-soluble unit dose articles may be created with compartments in a superposed configuration. Under this configuration each of the top, bottom and middle water-soluble film(s) can be water-soluble films according to the invention. Alternatively, one, for example, solely the middle water-soluble film or solely the top water-soluble film or solely the bottom water-soluble film, or a combination of any of these water-soluble films can be a water-soluble film according to the invention while the remaining water-soluble film(s) is (are) outside the scope of the invention. Preferably, all water-soluble films comprised within the water-soluble unit dose article are water-soluble films according to the invention. These water-soluble films according to the invention could be chemically and physically the same, or alternatively could be chemically and/or physically different. By "different" we mean the first water-soluble film is intended to have at least one chemical and/or physical characteristic different to that of the second water-soluble film. This characteristic can be by selecting a different polymeric resin, the polymeric resin for example varying in average individual polymer solution viscosity, average individual polymer degree of hydrolysis, ratio between the first and the second water-soluble polymers, or mixtures thereof. 'Targeted averages' take into consideration the standard polymer variation inherent to any manufacture process. Alternatively, this characteristic can be by varying the relative content of the individual components inside the water-soluble film such as polymeric resin to plasticizer content or water content, or even varying the exact chemistry of the additives. The "different" characteristic is assessed for the starting films prior to deformation, e.g. differences in water-soluble film content as a consequence of a deformation action, exposure to encapsulated detergent composition resulting in exchange of actives between film and the detergent composition, as well as actives exchange with surrounding storage environment are excluded in this assessment.

### Treatment composition

The treatment composition is selected from laundry detergent composition, laundry softening composition, automatic dishwashing composition, hard surface cleaning composition or a mixture thereof, preferably a laundry detergent composition, preferably the treatment composition is a liquid, a powder, or a mixture thereof, preferably a liquid composition.

The term liquid includes a gel, a solution, a dispersion, a paste or a mixture thereof.

By powder we herein mean the treatment composition may comprise solid particulates or may be a single homogenous solid. Preferably, the powder treatment composition comprises particles. This means the powder treatment composition comprises individual solid particles as opposed to the solid being a single homogenous solid. The particles may be free-flowing or may be compacted, preferably free-flowing.

Preferably, the treatment composition is a laundry detergent composition, most preferably a liquid laundry detergent composition.

The laundry detergent composition can be used in a fabric hand wash operation or may be used in an automatic machine fabric wash operation, preferably an automatic machine fabric wash operation.

Preferably, the treatment composition comprises a non-soap surfactant, wherein the non-soap surfactant comprises an anionic non-soap surfactant and a non-ionic surfactant. Preferably, the treatment composition comprises between 10% and 60%, more preferably between 20% and 55% by weight of the treatment composition of the non-soap surfactant.

The weight ratio of non-soap anionic surfactant to nonionic surfactant may be from 1:1 to 20:1, preferably from 1.25:1 to 17.5:1, from 1.5:1 to 15:1, or from 1.75:1 to 13:1, or from 2:1 to 10:1.

Preferably, the non-soap anionic surfactant comprises linear alkylbenzene sulphonate, alkyl sulphate or a mixture thereof. The weight ratio of linear alkylbenzene sulphonate to alkyl sulphate is from 1:2 to 9:1, preferably from 1:1 to 7:1, more preferably from 1:1 to 5:1, most preferably from 1:1 to 4:1.

Exemplary linear alkylbenzene sulphonates are C₁₀-C₁₆ alkyl benzene sulfonic acids, or C₁₁-C₁₄ alkyl benzene sulfonic acids. By 'linear', we herein mean the alkyl group is linear. Alkyl benzene sulfonates are well known in the art.

The alkyl sulphate anionic surfactant may comprise alkoxylated alkyl sulphate or non-alkoxylated alkyl sulphate or a mixture thereof. The alkoxylated alkyl sulphate anionic surfactant preferably is an ethoxylated alkyl sulphate anionic surfactant.

The alkyl sulphate anionic surfactant may comprise an ethoxylated alkyl sulphate anionic surfactant, preferably with a mol average degree of ethoxylation from 1 to 5, more preferably from 1 to 3, most preferably from 2 to 3.

The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, more preferably from 1 to 3, most preferably from 2 to 3.

The alkyl fraction of the alkyl sulphate anionic surfactant can preferably be derived from fatty alcohols, oxo-synthesized alcohols, guerbet alcohols, or mixtures thereof.

Preferably, the treatment composition comprises between 10% and 50%, more preferably between 15% and 45%, even more preferably between 20% and 40%, most preferably between 30% and 40% by weight of the treatment composition of the non-soap anionic surfactant.

Preferably, the non-ionic surfactant is selected from alcohol alkoxylate, an oxo-synthesised alcohol alkoxylate, Guerbet alcohol alkoxylates, alkyl phenol alcohol alkoxylates or a mixture thereof.

The treatment composition preferably comprises between 0.01% and 25%, preferably between 1% and 22.5%, more preferably between 5% and 20%, most preferably between 8% and 20% by weight of the treatment composition of a non-ionic surfactant.

Preferably, the treatment composition comprises between 0.5% and 20%, more preferably between 1% and 15%, even more preferably between 1.5% and 10%, most preferably between 2% and 8% by weight of the treatment composition of soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine.

Preferably, the treatment composition is a liquid treatment composition, more preferably the liquid treatment composition comprises less than 15%, more preferably less than 13%, even more preferably from 1% to 12%, most preferably from 5% to 12% by weight of the liquid treatment composition of water.

Preferably, the treatment composition is a liquid treatment composition comprising a non-aqueous solvent selected from 1,2-propanediol, dipropylene glycol, tripropyleneglycol, glycerol, sorbitol, polyethylene glycol or a mixture thereof. Preferably, the liquid treatment composition comprises between 10% and 40%, preferably between 15% and 30% by weight of the liquid treatment composition of the non-aqueous solvent.

Preferably the treatment composition comprises a perfume.

Preferably, the treatment composition comprises an adjunct ingredient selected from the group comprising builders including enzymes, citrate, bleach, bleach catalyst, dye, hueing dye, brightener, cleaning polymers including alkoxylated polyamines and polyethyleneimines, soil release polymer, surfactant, solvent, dye transfer inhibitors, chelant, encapsulated perfume, polycarboxylates, structurant, pH trimming agents, and mixtures thereof.

Those skilled in the art will know how to formulate and make a suitable treatment composition using known knowledge and techniques. The treatment composition may comprise common detergent ingredients including surfactants, polymers, bleach, enzymes, perfumes, dyes, structing agents, fillers, water or a mixture thereof.

Those skilled in the art will be aware of known techniques to make a water-soluble unit dose article according to the present invention.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### EXAMPLES

The % of dissolution of three bio-based water-soluble films was measured following the test method described herein below. Film 1 is based on a water-soluble caseinate polymer. Film 2 is based on a water-soluble pectin. Film 3 is based on a 50/50 blend by weight of caseinate polymer and pectin. The data summarized in table 1 shows a synergistic % of dissolution for the blend.

**Table 1: % dissolution of water-soluble films**

| | |
|---|---|
| Film 1 (caseinate polymer) | 33% |
| Film 2 (pectin) | 15% |
| Film 3 (50/50 sodium caseinate / pectin polymer blend) | 48% |

### Water-soluble film making process

A 100 wt% active pectin or caseinate polymer or a 50/50 blend by weight solution (pectin from citrus peel ex Sigma Aldrich, Sodium caseinate ex Thermoscientific) was prepared in demineralized water with 43% glycerol by weight of polymer. The solutions were mixed at 70°C for at least 4hours to a homogeneous solution and allowed to stand overnight at room temperature to enable de-aeration prior to casting. The solution was poured into a thin layer through a film applicator with a wet gap in the range of 250 µm to 350 µm onto a PET casting plate, and allowed to dry overnight at room temperature and 35% rH. The resulting film comprises 66wt% of water-soluble polymeric resin, 28wt% of glycerol plasticizer system and 6% of water. Individual film thicknesses are summarized in the table 2 below.

**Table 2: film thickness**

| | |
|---|---|
| Film 1 (caseinate polymer) | 98 µm |
| Film 2 (pectin) | 66 µm |
| Film 3 (50/50 caseinate / pectin blend) | 84 µm |

### % dissolution test method

Within this Dissolution Chamber Residue Test method, for each film to be tested, three test specimens are cut from a selected test film having a thickness of about 80 µm using a cutting punch. Weigh the film specimen and track the specimen through the test, so that all specimen have a similar starting weight (within 10% difference). Record the initial film weight (Fo). Weigh a set of two sonicated, clean, and dry screens for each specimen and track them through the test. Record the initial screen weights (collectively, so for the two screens combined - So). Assemble a specimen dissolution chamber by flatly sandwiching the film specimen between the center of the two screens, followed by two rubber gaskets (one gasket on each side between the screen and washer), and then the two washers. Secure the dissolution chamber assembly with four binder clips evenly spaced around the washers and the clips folded back away from the screens. Fill a beaker with 1,500 ml of RO water (e.g. demineralized water) at laboratory room temperature (5 +/- 1°C) and record the room temperature. Set the timer to a prescribed immersion time of 10 minutes. Place the dissolution chamber assembly into the beaker and immediately start the timer, inserting the dissolution chamber assembly at an approximate 45 degree entry angle into the water surface. This entry angle helps remove air bubbles from the chamber. The dissolution chamber assembly rests on the beaker bottom such that the test specimen film is positioned horizontally about 10 mm from the bottom. The four folded-back binder clips of the dissolution chamber assembly are suitable to maintain the about 10 mm film clearance from the beaker bottom, however, any other equivalent support means may be used. At the end of the 10 minutes, slowly remove the dissolution chamber assembly from the beaker at an approximate 45 degree angle. Hold the dissolution chamber assembly horizontally over an aluminium pan that has been pre-weighed to catch any drips from the screens and carefully remove the binder clips, washers, and gaskets. Do not break open the sandwiched screens. Place the sandwiched screens (i.e., screen/residual undissolved film/screen) over the aluminium pan and into an oven at 100°C for 30 minutes to dry. Weigh the dried set of sandwiched screens including any residual undissolved film therein together with the aluminum pan. Subtract the weight of the aluminium pan and record the final sandwiched screen weight (collectively Sf, including the dried film drippings). Calculate % residue ("DC residue") left for the film specimen: $DC residue = 100 \times \left(\left(Sf-So\right)/F0\right)$

The % dissolution hence equals 100% minus the % residue.

## Claims

1. A water-soluble unit dose article comprising a water-soluble film, a treatment composition and at least one internal compartment, wherein the treatment composition is contained within the at least one internal compartment, the treatment composition is selected from laundry detergent composition, laundry softening composition, automatic dishwashing composition, hard surface cleaning composition or a mixture thereof, , the water-soluble film comprises a water-soluble polymer, the water-soluble polymer comprises a blend of:
i) pectin; and
ii) a caseinate polymer.
wherein the water-soluble polymer is present between 50% and 95% by weight of the film and the pectin and the caseinate polymer are in a weight ratio of from 90:10 to 10:90

2. The water-soluble unit dose article according to claim 1, wherein the pectin and the caseinate polymer are in a weight ratio of from 75:25 to 25:75.

3. The water-soluble unit dose article according to any of claims 1 or 2, wherein the caseinate polymer is selected from alkaline metal salts of caseinate, preferably sodium caseinate.

4. The water-soluble unit dose article according to any of the preceding claims wherein the water-soluble polymer is present between 55% and 90%, preferably between 60% and 80% by weight of the film.

5. The water-soluble unit dose article according to any of the preceding claims wherein the film comprises a non-aqueous plasticizer, preferably wherein the non-aqueous plasticizer is selected from polyols, sugar alcohols, and mixtures thereof, more preferably selected from glycerol, 1,2-propanediol, trimethylolpropane, dipropylene glycol, 2-methyl-1,3-propanediol, 2-ethyl-2-hydroxymethyl-1,3-propanediol, triethyleneglycol, polyethyleneglycol, sorbitol, or a mixture thereof, most preferably selected from glycerol, sorbitol, trimethylolpropane, dipropylene glycol, and mixtures thereof, preferably wherein the film comprises between 5% and 50%, preferably between 10% and 40%, more preferably between 20% and 30% by weight of the film of the non-aqueous plasticizer.

6. The water-soluble unit dose article according to any preceding claims wherein the water-soluble film comprises a surfactant in an amount between 0.1% and 5%, preferably between 1% and 3% by weight of the water-soluble film.

7. The water-soluble unit dose article according to any of the preceding claims wherein the film has a dissolution time of less than 120 seconds, preferably less than 90 seconds, more preferably less than 60 seconds according to MSTM-205 at 5°C for a 76 micron thick film.

8. The water-soluble unit dose article according to any of the preceding claims wherein the water-soluble film comprises a residual moisture content of at least 4%, more preferably from 4% to 15%, even more preferably from 5% to 10% by weight of the film, as measured by Karl Fischer titration.

9. The water-soluble unit dose article according to any of the preceding claims, wherein the water-soluble film has a thickness of between 30µm and 150µm, preferably between 50µm and 100µm, most preferably between 60µm and 85 µm.

10. A process for making the film of the water-soluble unit dose article according to any of the preceding claims comprising the steps of:
i) dissolving the caseinate polymer, pectin and optional additives in water to form an aqueous solution; and
ii) casting the solution resulting from step i) into a film.

11. The water-soluble unit dose article according to any of claims 1 to 9 wherein the film has a % of dissolution of 25% or more, preferably 35 % or more as measured by the % dissolution test method described herein.

12. The water-soluble unit dose article according to any of claims 1 to 9 or 11, wherein the treatment composition is a liquid, a powder, or a mixture thereof, preferably a liquid laundry composition.

13. The water-soluble unit dose article according to any of claims 1 to 9 or 11 to 12 wherein the treatment composition comprises a non-soap surfactant, wherein preferably, the non-soap surfactant is selected from anionic non-soap surfactants, non-ionic surfactants, and mixtures thereof, preferably wherein the treatment composition comprises between 10% and 60%, more preferably between 20% and 55% by weight of the treatment composition of the non-soap surfactant.

14. The water-soluble unit dose article according to any of claims 1 to 9 or 1 to 13, wherein the treatment composition comprises less than 15%, preferably less than 13%, preferably between 1% and 12%, preferably from 5% to 12% by weight of the treatment composition of water.

15. The water-soluble unit dose article according to any of claims 1 to 9 or 11 to 14, wherein the treatment composition comprises between 10% and 40%, preferably between 15% and 30% by weight of the treatment composition of a non-aqueous solvent.
